# EUROPEAN PATENT SPECIFICATION

(11) **EP 4 261 108 B1**
(45) Date of publication and mention of the grant of the patent: **17.07.2024**
(21) Application number: 23164302.4
(22) Date of filing: 27.03.2023
(51) Int. Cl.: B62D 25/16

(54) **MUDGUARD ASSEMBLY**
KOTFLÜGELANORDNUNG
ENSEMBLE GARDE-BOUE

(30) Priority: 14.04.2022 GB 202205529
(43) Date of publication of application: 18.10.2023
(73) Proprietor: AGCO International GmbH, 8212 Neuhausen am Rheinfall (CH)
(72) Inventor: HOKKANEN, Henri, 44200 Suolahti (FI)
(74) Representative: AGCO Intellectual Property Department

(56) References cited:
- WO-A1-2017/204715
- DE-A1- 102004 054 692
- GB-A- 2 151 569
- US-A1- 2012 080 908

## Description

### FIELD

Embodiments of the present disclosure relate generally to a mudguard assembly for a vehicle, especially an agricultural vehicle such as an agricultural tractor.

### BACKGROUND

Mudguards are provided for the wheels of agricultural vehicles such as tractors to reduce the spray of mud and other elements from the wheels as the vehicle moves. A typical mudguard assembly includes a mudguard or fender which forms a cover surrounding a part of a wheel and a supporting structure to hold the mudguard in position. In a simple arrangement, the mudguard is moulded from polymeric material and takes the form of a relatively thin, panel-like member which is curved or otherwise shaped to follow the outer circumference of the wheel. Often, a supporting structure has a frame portion which extends over a large area of the mudguard to provide structural support for the mudguard which is otherwise too flexible to hold its shape in use. This is problematic as it requires a complex supporting structure which is expensive to manufacture and difficult to assemble. It also has the effect of increasing the spacing between a lower surface of the mudguard and the wheel, reducing the effectiveness of the mudguard and potentially reducing the field of vision of the driver. A further drawback of known mudguard assemblies is that different mudguards and/or supporting structures are often required for use on either side of the vehicle. This leads to increased manufacturing costs and component inventory for the vehicle manufacturer and/or supplier.

WO 2017/204715 discloses a mudguard assembly for a vehicle according to the pre-characterizing portion of claim 1.

### BRIEF SUMMARY

Aspects of the invention are directed to a mudguard assembly for a vehicle, especially an agricultural vehicle such as a tractor, and to a vehicle having such a mudguard assembly.

According to the invention, there is provided a mudguard assembly for a vehicle, the mudguard assembly comprising a mudguard and a support for mounting the mudguard to a structural component of the vehicle, the support comprising a mudguard mounting portion to which the mudguard is mounted; the mudguard comprising an elongate main body member having a longitudinal direction, the main body member being shaped in the longitudinal direction for extending over a wheel of the vehicle, the main body member having a lower surface which in use is directed toward the wheel and upper surface which in use is directed away from the wheel, the main body member being profiled to define a mounting region including a recess with a downwardly facing opening in which at least part of the mudguard mounting portion is located, wherein the mounting region projects outwardly beyond the upper surface of the main body member proximal to the mounting region; the recess having a longitudinal portion extending generally in the longitudinal direction of the main body member and at least one lateral portion that extends from an end of the longitudinal portion to a first longitudinal side edge of the main body member, the mudguard mounting portion having a longitudinal section located in the longitudinal portion of the recess and a lateral section angled relative to the longitudinal section and located in the lateral portion of the recess..

Defining the recess for the mudguard mounting portion in a raised mounting region of the main body member enables a lower surface of the main body member to be positioned closer to the wheel, making the mudguard more effective at preventing spray. Profiling of the main body member to define the mounting portion provides the main body member with structural rigidity so that it is less dependent on the support to retain its shape in use. This enables a simpler supporting structure to be adopted.

The main body member may be curved in the longitudinal direction.

The main body member may be a sheet like member which is profiled to define the mounting region in the form of a raised or embossed channel-like formation.

The mudguard assembly may be configured such that the mudguard mounting portion of the tubular support is wholly located above the lower surface of the main body of the mudguard when assembled.

The recess may have two lateral portions, each lateral portion extending from a respective end of the longitudinal portion to the first longitudinal side edge of the main body member.

By forming the recess with two lateral portions, the main body member can be used on either side of the vehicle. The lateral section of the support locates in one of the lateral portions when the main body member is positioned for use with a wheel on a first side of the vehicle and locates in the other of the lateral portions when the main body member is positioned for use with a wheel on the other side of the vehicle. Advantageously, the main body member is symmetrical about a line of symmetry (i.e., a mirror line) extending laterally at the longitudinal mid-point of the main body member.

The main body member may define a respective downwardly projecting side wall region extending along each of the first and a second longitudinal side edge and at least one aperture may be defined in the side wall region at the first longitudinal side edge, the aperture opening into the at least one lateral portion of the recess and through which the lateral section of the mounting portion passes. Where the recess has two lateral portions, a respective aperture may be provided in the side wall region at the first longitudinal side edge in alignment with each of the lateral portions of the recess.

The mounting region may comprise first and second opposed side walls and an upper wall which define the recess between them. At least one brace may extend across the recess between the first and second side walls. The at least one brace may define a recess for receiving the mudguard mounting portion. There may be a plurality of braces. The mounting region may project beyond the side wall region of the main body member at the first longitudinal side edge.

The support may comprise a telescopically adjustable mechanism configured to enable the height of the mudguard to be adjusted.

The support may comprise a first part for attachment to the structural component and a second part including the mudguard mounting portion which is releasably attachable to the first part. The first part of the support may include a first attachment portion configured to extend generally upright in use, and the second part of the support may have a corresponding second attachment portion which is angled relative to the mudguard mounting portion and configured to be releasably attachable to the first attachment portion. The mudguard assembly may comprise an attachment system for securing the second attachment portion to the first attachment portion. The attachment system may be configured to enable the height at which the second attachment position is secured relative to the first attachment position to be adjusted. A part of one of the first and second attachment portions may be telescopically located within a part of the other of the first and second attachment portions. Said one of the first and second attachment portions may be provided with an array of first mounting apertures arranged in diametrically opposed sets (e.g. pairs) at different heights. The other of the first and second attachment portions may be provided with a pair of diametrically opposed second mounting apertures which are configured to be aligned with any one of the sets of first mounting apertures. The mudguard assembly may have a cotter pin or other fastener which is configured to be inserted through aligned first and second mounting apertures to secure the first and second attachment portions together.

The support may be configured to enable the height at which the mudguard is held above the structural component to be adjusted.

The structural component may be an axle and may be a front axle.

The second attachment portion may be angled in the region of 80 to 100 degrees, and more particularly in the region of 85-95 degrees, relative to the mudguard mounting portion. The arrangement may be configured such that in use, at least the lateral section of the mudguard mounting portion is aligned generally horizontally. The longitudinal section of the mudguard mounting portion may be configured so as to inclined downwardly and rearward from the lateral section in use.

The second part of the support and at least the first attachment portion of the first part of the support may be tubular structures.

The main body member may be profiled to define features which provide structural rigidity. The main body member may be profiled to define at least one stiffening ridge.

The mudguard may include a cover member mounted about an upper surface of the mounting region of the main body member. Where the main body member is symmetrical about a line of symmetry extending laterally at the longitudinal mid-point of the main body member, the cover member may also be symmetrical about a line of symmetry extending laterally at the longitudinal mid-point of the cover member and which is coincident with the line of symmetry of the main body member. The mudguard may be attached to the mudguard mounting portion of the support by means of brackets secured to the mudguard by releasable fasteners. The releasable fasteners may be threaded fasteners, such as bolts or screws. The threaded fasteners may engage in respective threaded apertures provided in the main body member. Where the mudguard has a cover member, the threaded fasteners may pass through corresponding apertures in the main body member and engage in respective threaded apertures provided in the cover member.

At least one extension member may be provided at one end the main body member. An extension member may be provided at each end the main body member. The at least one extension member may be made from a material different from that used to form the main body member. The extension member may be formed from a rubber material and the main body member may be formed from a plastics material. The main body member and the at least one extension member may be manufactured using a double-injection moulding technique.

In accordance with a further aspect of the invention, there is provided a vehicle comprising a mudguard assembly according to the aspect first set out above. The vehicle may be an agricultural vehicle and may be a tractor.

### BRIEF DESCRIPTION OF THE DRAWINGS

One or more embodiments of the invention will now be described, by way of example only, with reference to the accompanying drawings, in which:
FIG. 1 is a simplified side view of a tractor having a mudguard assembly according to an aspect of the invention;
FIG. 2 is a perspective view of a mudguard assembly according to an aspect of the invention which forms part of the vehicle of FIG. 1;
FIG. 3 is a perspective view of a front axle assembly of the vehicle of FIG. 1 to which a pair of the mudguard assembles of FIG. 2 are mounted;
FIG. 4 is a longitudinal cross sectional view through the mudguard assembly of FIG.2;
FIG. 5 is a perspective view of part of the mudguard assembly of FIG.2 illustrating an arrangement for adjusting the height of the mudguard;
FIG. 6 is a perspective view from below of the mudguard assembly of FIG. 2;
FIG. 7 is an exploded, perspective view from below of part of the mudguard assembly of FIG. 2, illustrating an arrangement for securing a mudguard to a support;
FIG. 8 is a perspective view from above of a main body member forming part of the mudguard assembly of FIG. 2; and
FIG. 9 is a perspective view of a modified embodiment of the mudguard assembly of FIG. 2 in which extensions are moulded to a main body member of the mudguard.

### DETAILED DESCRIPTION

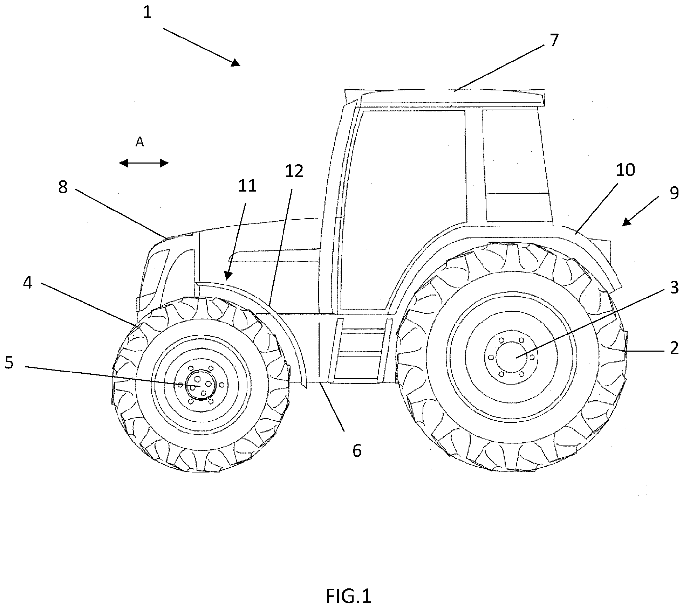

Embodiments of the present disclosure will now be described with reference to an agricultural vehicle in the form of an agricultural tractor 1, as illustrated schematically in FIG. 1. However, mudguards and mudguard assemblies according to aspects of the present invention can be adapted for use with other types of vehicle including other types of agricultural vehicle or mobile machine such as harvesters and the like.

With reference to FIG. 1, a tractor 1 has a rear wheels 2 mounted to a rear axle 3, steerable front wheels 4 mounted to a front axle 5, and a frame or chassis 6 supported on the axles 3, 5. A user cab 7 is mounted to the frame 6 and an engine compartment 8 containing an IC engine or other prime mover is located in front of the cab 7. Rear mudguard assemblies 9 each have a rear mudguard 10 mounted to the vehicle to partially encircle an outer periphery of a respective one of the rear wheels 2 and front mudguard assemblies 11 each have a front mudguard 12 mounted to the vehicle to partially encircle an outer periphery of a respective one of the front wheels 4. Only one rear mudguard assembly 9 and one front mudguard assembly 11 are shown in FIG.1 but it will be appreciated that corresponding mudguard assemblies are provided for the wheels on the opposite side of the tractor.

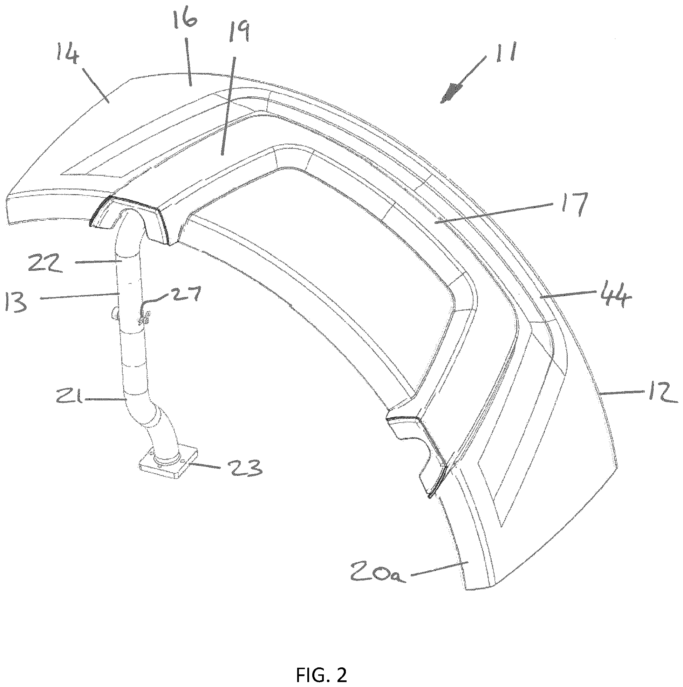

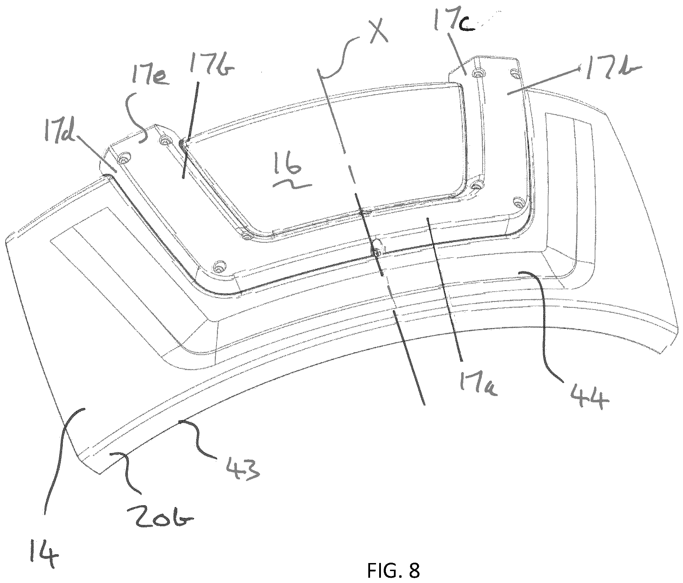

The front mudguard assemblies 11 are configured in accordance with an aspect of the invention. Embodiments of which will now be described with reference to FIGs. 2 to 9.

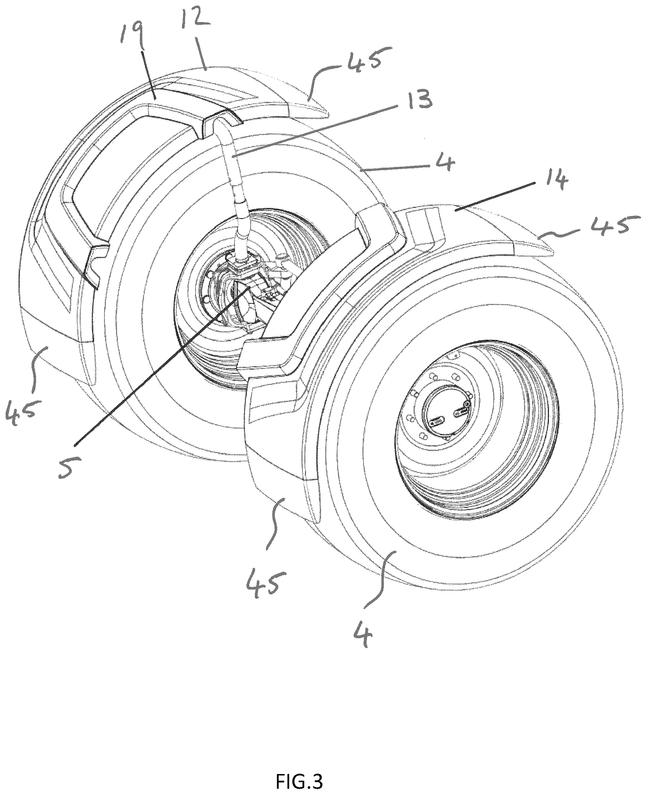

Each front mudguard assembly 11 includes a mudguard 12 and a support 13 which mounts the mudguard 12 to a structural component of the vehicle 1. In use, the mudguard 12 is positioned so that it partially encircles an upper circumferential extent of one of the front wheels 4. As illustrated in FIG. 3, the support 13 may be mounted to a casing of the front axle 5 at a position adjacent to the wheel 4. This has the advantage that the mudguard 12 moves with the axle 5 so as to maintain a desired clearance between the mudguard 12 and the wheel 4 as the axle 5 moves relative to the frame 6. However, the support 13 can be attached to any other suitable structural component of the vehicle 1 such as the frame 6 or a component mounted to the frame, depending on the overall structure of the vehicle.

Each mudguard 12 has a main body member 14 which is elongate and curved in a longitudinal direction (which in use aligns generally to a fore and aft direction of the vehicle 1 as indicated by arrow A in FIG. 1) so as to partially encircle a circumferential extent of the wheel 4. The main body member 14 is operative in use to reduce the spray of mud, dirt, water, and other elements from the wheel 4 when the vehicle is moving. The main body member 14 has a lower surface 15 which in use is directed toward the wheel 4 and an upper surface 16 which in use is directed away from the wheel. The main body member 14 has a mounting region 17 which defines a recess 18 that opens at the lower surface 15 in a downwardly facing direction in use. In the illustrated embodiment, each mudguard 12 also includes an initially separate cover member 19 mounted about the mounting region 17 on the upper surface 16 of the main body member. However, in other embodiments, the cover member 19 can be omitted. The main body 14 member can be made of any suitable material by any suitable method but in an embodiment is moulded from one or more polymeric materials, such as high density poly ethylene (HD-PE), for example. The cover member 19 can also be can be made of any suitable material by any suitable method but in an embodiment is moulded from one or more polymeric materials such as Polydicyclopentadiene (PDCPD), for example. The cover member 19 may be provided in a colour which is different from that of the main body member 14. The colour of the cover member 19 could be coordinated with the colour scheme of the vehicle as a whole. The cover member 19 could, for example, be the same colour as parts of the body work of the cab 7 or a contrasting colour. The colour of the cover member 19 could be adapted to form part of the branding or "get up" of the vehicle manufacturer.

The mounting region 17 and recess 18 are generally U-shaped in plan, having a central region 17a, 18a which extends generally in the longitudinal direction of the main body member and a lateral region 17b, 18b at either end of the longitudinal region 17a, 18a which each extend generally in a lateral direction from the longitudinal region 17a, 18a to a first longitudinal side edge 20a of the main body member. The longitudinal region 17a, 18a may be located beyond a longitudinal centre line of the main body from first longitudinal side 20a so as to be closer to an opposing, second longitudinal side edge 20b. In the embodiment as illustrated, the lateral regions 17b, 18b do not extend perpendicularly relative to the longitudinal region 17a, 18a or parallel to one another but are angled away from each other by a limited extent in a direction towards the first longitudinal side edge 20a. However, the precise shape of the mounting region 17 and recess 18 can be varied depending on the particular requirements of any given vehicle.

The support 13 is a largely tubular structure which includes a first part 21 mounted to the front axle 5 and a second part 22 which supports the mudguard and which is releasably attachable to the first part 21. The first part 21 includes a first tubular attachment portion 21a which is configured to extend generally upright in use and a vehicle mounting portion 21b with a mounting bracket 21c. The mounting bracket 21c has apertures 23 for receiving releasable fasteners, e.g. bolts or screws or the like, to secure the first part 21 to the axel casing. Other arrangements for releasably securing the first part 21 to the axle 5 can be adopted.

The second part 22 has a second tubular attachment portion 22a and a tubular mudguard mounting portion 22b. The second tubular attachment portion 22a is configured to extend generally upright coaxially with the first tubular attachment portion 21a in use. The mudguard mounting portion 22b is angled relative to the second tubular attachment portion 22a and includes a lateral section 24 which is received in one of the lateral regions 18b of the recess 18 in the mudguard mounting region 17 and a longitudinal section 25 which is received in the longitudinal region 18a of the recess. In use, the lateral section 24 is aligned to extend generally horizontally above the wheel 4 whilst the longitudinal section 25 is inclined downwardly and rearward from the lateral section 24 so that the main body member 14 of the mudguard is held so as to extend in close proximity about an upper and rearward portion of the outer circumference of the wheel 4. This configuration is particularly suited to mounting mudguards for the front wheels 4 of a vehicle 1. However, it will be appreciated that the shape and inclination of the various sections of the mudguard mounting portion 22a can be adapted depending on the required shape and configuration of the mudguard and might be different for use with a rear wheel.

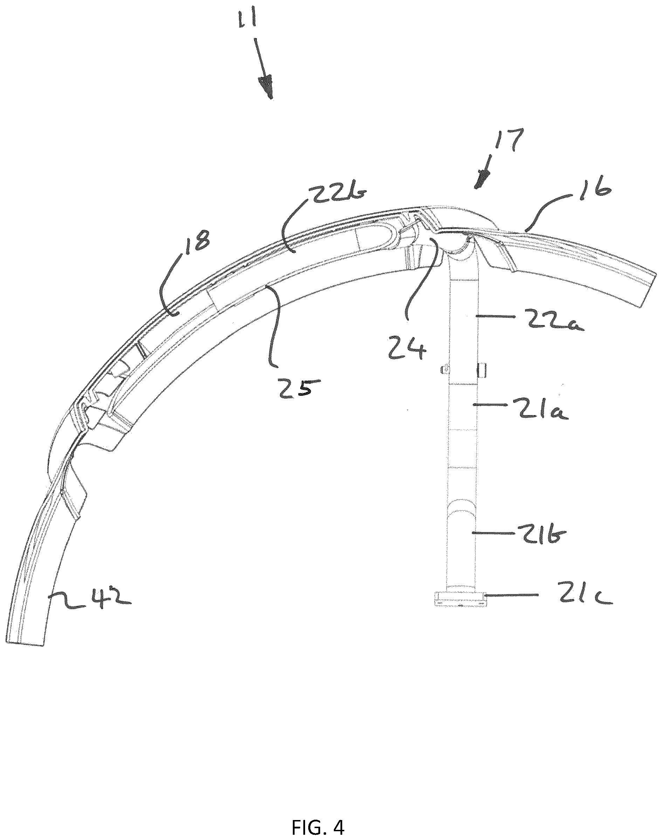

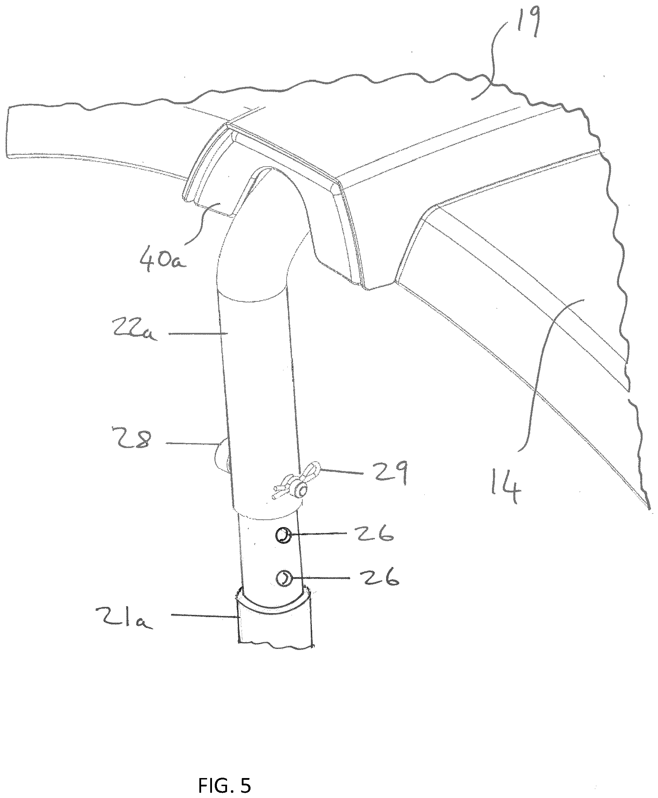

As can be seen best in FIG. 4, the mudguard mounting portion 22a of the second part 22 of the support 13 is mainly located within the recess 18, which is offset upwardly from the lower, inner surface 15 of the majority of the of the main body member 14. Advantageously, this enables the lower, inner surface 15 of the majority of the main body member 14 to be positioned closer to the outer circumference of the wheel 4 than would be possible if the mounting portion 22b were located below the lower, inner surface 15, as in a conventional mudguard arrangement. The height at which the second tubular attachment portion 22a is secured to the first tubular attachment portion 21a is adjustable to enable adjustment of the height of the mudguard 12 relative to the wheel 4. To this end, and as seen best in FIG. 5, the first tubular attachment portion 21a and the second tubular attachment portion 22a are telescopically mounted to each other. In the present case, a part of the second tubular attachment portion 22a is a close sliding fit over at part of the first attachment portion 21a. An array of holes 26 arranged in diametrically opposed sets or pairs at different heights are provided in the telescopic part of the first attachment portion 21a. A corresponding pair of diametrically opposed holes 27 are provided in the second attachment portion 22a where it fits over the telescopic part of the first attachment portion 21. The holes 27 in the second attachment portion can be aligned with any one of the sets of holes 26 in the first attachment portion and a cotter pin 28 inserted through the holes 27 in the second attachment portion passing through the aligned set of holes 26 in the first attachment portion to secure the second attachment portion 22a to the first attachment portion 21a at a desired height. The cotter pin 28 is secured in place with a spring safety clip 29 in a known manner. Only two sets of holes 26 in the first attachment portion 21a are visible in FIG. 5 but it will be appreciated that there is at least one further set located where the cotter pin 28 is shown. The height of the mudguard 12 relative to the wheel 4 can be adjusted by attaching the second attachment portion 22a using different sets of holes 26 in the first attachment portion 21a. The first and second attachment portions 21a, 22a are a close sliding fit so that the two are firmly secured together without excessive movement of the second attachment portion 22a relative to the first 21a once the cotter pin 28 is in place. It will be appreciated that in an alternative arrangement the second attachment portion 22a could be received within the first tubular attachment portion 21a and that an arrangement other than a cotter pin 28 can be used to secure the two parts together. For example, a clamping arrangement could be used or a fastener such as a nut and bolt used in place of the cotter pin 28. Other arrangements to enable the first and second attachment portions 21a, 22a to be adjustably coupled together to vary the height of the mudguard 12 can be adopted as will be apparent to those skilled in the art.

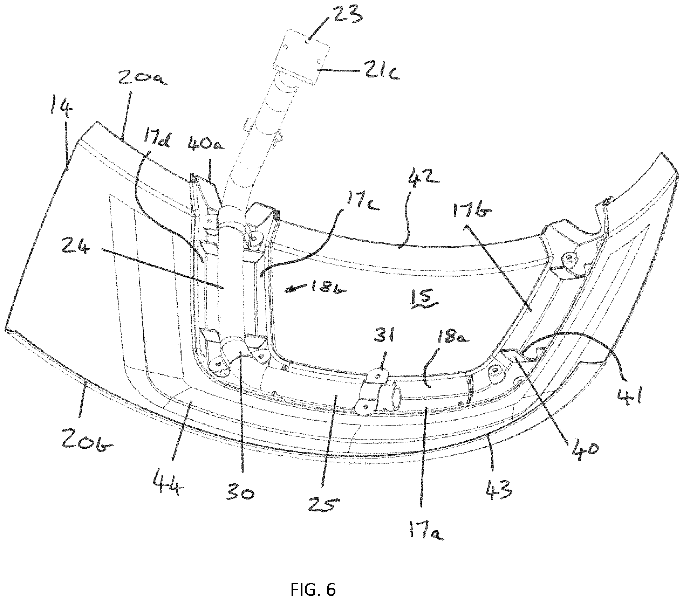

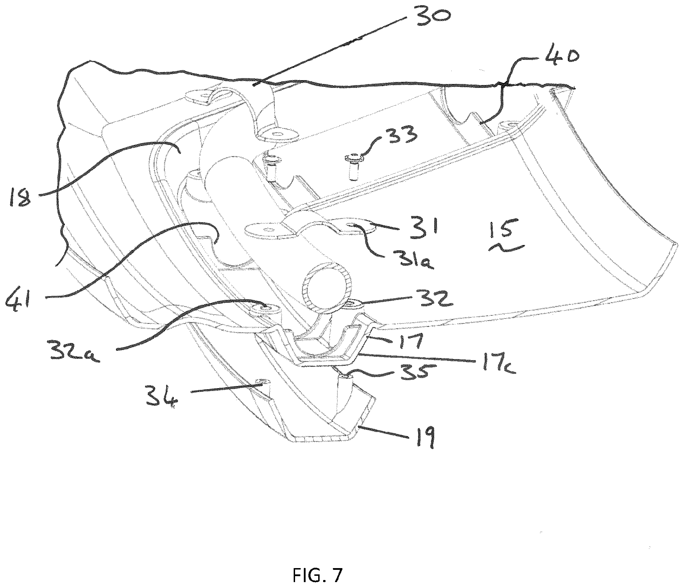

Attachment of the mudguard 12 to the mudguard mounting portion 22b of the second part 22 of the support 13 will be described with reference to FIGs 6 and 7. The mounting portion 22b is located in the recess 18, with the lateral section 24 located in one of the lateral portions 18b and the longitudinal section 25 extending over half way along the longitudinal portion 18a. The mounting portion 22b is secured in position using a number of brackets 30. In the present embodiment there are three brackets 30 but more or fewer than three brackets could be used. Each bracket 30 is in the form of a curved band with a tab 31 at either end. The bracket 30 partially encircles the tubular mounting portion 22b and each tab 31 aligns with a respective lug 32 in the main body member. Aligned apertures 31a, 32a extend though each tab 31 and lug 32 through which the threaded shaft of a releasable fastener 33 (e.g. a screw or bolt or the like) is inserted. Where the mudguard 12 has a cover member 19, the cover member is provided with fastener formations 34 which align with respective lugs 32 and which include an internally treaded aperture 35 in which the shaft of the releasable fastener 33 is received. Each fastener 33 has a head which locates adjacent the tab 31 such that when the fasteners are tightened, the main body 14 of the mudguard is clamped between the bracket 30 and the cover member 19. When all the fasteners 33 securing the three brackets 30 are engaged and tightened, the main body member 14 is firmly clamped to the mounting portion 22b. The threaded apertures 35 may be formed directly the cover member 19 or fastening members, such as captive nuts or the like, may attached to the fastener formations 34 to define the threaded apertures 35. In an alternative embodiment, especially where no cover member 19 is provided, the apertures 32a of lugs 32 of the main body member 14 are threaded and the fasteners 33 are screwed into the lugs 32. The threads in apertures 32a may be formed in the body member 14 itself or by fastening members, such as captive nuts or the like, secured in each aperture 32a to define the threads.

The methods of attaching the mudguard 12 to the mudguard mounting portion 22b described above have the advantage that no fasteners are visible from above the mudguard.

The main body member 14 is predominantly a relatively thin, curved, panel or sheet-like structure. However, the mounting region 17, which comprises a raised or embossed elongate channel-like formation having opposed side walls 17c, 17d and an upper wall 17e, helps to provide the main body member 14 with structural rigidity so that it does not rely on the support 13 to hold its shape. To provide further structural rigidity, there are a number of braces 40 which extend internally across the recess 18 from one side wall 17c of the channel-like member to the other 17d and are also attached to the upper wall 17e. Each of the braces 40 are profiled to define a recess 41 in which the mudguard mounting portion 22b of the second part 22 of the support 13 is received. The braces not only increase the structural rigidity of the main body member 14 but also help to support the mudguard mounting portion 22b of the support 13. In an embodiment, the main body member 14 may be profiled to define a number of other stiffening features which provide structural rigidity. For example, the main body member 14 may have a downwardly projecting side wall region 42, 43 extending along either longitudinal side edge 20a, 20b. At the first longitude side edge 20a, the mounting region 17 projects beyond the side wall region 42 at either end and is partially closed by an outer brace 40a. The cover member 19 may extend over the projecting end sections of the mounting region 17 and may be profiled to engage the outer surface of the side wall region 42. This also helps to increase the structural rigidity of the main body member 14 when assembled. In an embodiment, the main body member 14 is also profiled to define at least one stiffening ridge 44 which surrounds the mounting formation 17 on the outer side thereof. The number and type of stiffening formations provided in the main body member 14 can be varied from those described above. However, it is preferred that the main body member 14 itself has sufficient structural integrity that it is not reliant on external support to hold its shape in use, beyond location of the mudguard mounting portion 22b in the recess 18.

For mounting the mudguard assembly 11 to a vehicle 1, it is expected that the first part 21 of the support 13 will be mounted to the axle 4 separately from the second part 22 of the support and that the mudguard 12, including the main body member 14 and the cover member 19 (where present), will be attached to the second part 22 of the support 13. The two parts 21, 22 of the support can then be coupled together at the correct height. To remove or replace the mudguard, the first and second parts 21, 22 of the support 13 can be separated to provide access to the fasteners 33 securing the mudguard to the mudguard mounting portion 22b.

The main body member 14 and the cover 19 (where provided) may be arranged to be symmetrical about a line of symmetry X (i.e. a mirror line) which extends laterally across the main body member 14 at a position half-way along its length. This enables a main body member 14 and cover member 19 to be used on either side of a vehicle 1. When a mudguard 12 is used on one side of the vehicle, the lateral section 24 of the mudguard mounting portion 22b locates in a first one of the lateral portions 18b of the recess 18 and when used on the other side of the vehicle it locates in the other of the lateral portions 18b. The first part 21 of the support 13 is also configured so that it can be used on either side of the vehicle. The only part of the mudguard assembly 11 which is handed is the second part 22 of the support 13. However, where this is a tubular structure, as is the case in this embodiment, it is relatively easy and cheap to manufacture. Generally, it is preferable to produce differently shaped tubular mounting portions 22b rather than moulding differently shaped mudguards for use on either side of a vehicle. The provision of a mudguard assembly 11 in which a majority of the components can be fitted to either side of a vehicle helps to reduce manufacturing costs and means that the vehicle manufacturer (and/or a supplier of the mudguard assembly) have a reduced inventory of parts that must be stored.

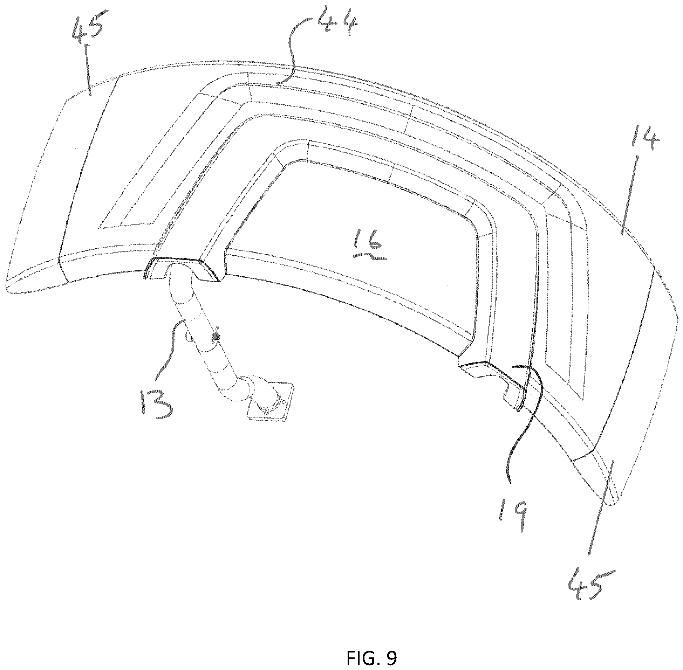

FIG. 9 illustrates a modification in which extension members 45 are moulded onto the main body member 14. In the embodiment as illustrated, similar extension members 45 are moulded to each end of the main body member 14 so that the resulting combination remains symmetrical about line of symmetry X and can be used on either side of a vehicle. However, in alterative embodiments, only one extension member 45 may be moulded or the extension members at either end may be different. The extension members 45 may be of a different material to the main body member 14 and could, for example, be moulded from rubber (synthetic or natural) or other elastomeric materials whilst the main body member 14 is moulded from one or more polymeric (plastics) materials. A double injection moulding technique (also referred to as two-shot injection or 2k moulding) can be used to mould extension members 45 to the main body member 14. The addition of one or more extension members 45 extends the length of the mudguard 12 making it suitable for use on a larger vehicle and/or provides additional coverage of the wheel 4. Thus the same moulding tools can be used to produce a mudguards of different lengths suitable for a range of vehicles and applications, some with two extension members 45, some with only one extension member 45 at one end, and some with no extension members.

Rather than being moulded onto the main body member 14, one or more extension members 45 can be mechanically attached to the main body member 14. In this embodiment, the one or more extension members 45 could be secured in position using fasteners, which may be releasable (e.g. a nut and bolt).

Whilst aspects of the invention have been described with reference to embodiments of a mudguard assembly most suitable for a front wheel 4 of a tractor, the principles can be adopted for use in producing a mudguard assembly for a rear wheel of a tractor 1 or mudguard assemblies for use with other types of vehicle, especially agricultural vehicles.

## Claims

1. A mudguard assembly (11) for a vehicle, the mudguard assembly comprising a mudguard (12) and a support (13) for mounting the mudguard to a structural component of the vehicle, the support comprising a mudguard mounting portion (22b) to which the mudguard is mounted; the mudguard comprising an elongate main body member (14) having a longitudinal direction, the main body member being shaped in the longitudinal direction for extending over a wheel of the vehicle, the main body member having a lower surface (15) which in use is directed toward the wheel and an upper surface (16) which in use is directed away from the wheel, the main body member being profiled to define a mounting region (17) including a recess (18) with a downwardly facing opening in which at least part of the mudguard mounting portion (22b) is located, wherein the mounting region projects (17) outwardly beyond the upper surface (16) of the main body member proximal to the mounting region; **characterized in that** the recess (18) has longitudinal portion (18a) extending generally in the longitudinal direction of the main body member and at least one lateral portion (18b) that extends from an end of the longitudinal portion to a first longitudinal side edge (20a) of the main body member, the mudguard mounting portion (22b) having a longitudinal section (25) located in the longitudinal portion of the recess and a lateral section (24) angled relative to the longitudinal section and located in the lateral portion of the recess.

2. A mudguard assembly as claimed in claim 1, where in the main body portion (14) is a sheet-like member profiled to define the mounting region (17) in the form of an embossed, channel-like formation.

3. A mudguard assembly as claimed in claim 1, wherein the recess (18) has two lateral portions (18b), each lateral portion extending from a respective end of the longitudinal portion (18a) to the first longitudinal side edge (20a) of the main body member.

4. A mudguard assembly as claimed in anyone of the preceding claims, wherein the support (13) comprises a first part (21) for attachment to the structural component and a second part (22) including the mudguard mounting portion (22b), wherein the first part of the support includes a first attachment portion (21a) configured to extend generally upright in use, the second part (22) of the support having a corresponding second attachment portion (22a) angled relative to the mudguard mounting portion and configured to be releasably attachable to the first attachment portion.

5. A mudguard assembly as claimed in claim 1 or claim 3, wherein the main body member (14) defines a respective downwardly projecting side wall region (42, 43) extending along each of the first and a second longitudinal side edge (20a, 20b), at least one aperture being defined in the side wall region at the first longitudinal side edge (20a), the aperture opening into the at least one lateral portion (18b) of the recess and through which the lateral section (24) of the mounting portion passes.

6. A mudguard assembly as claimed in claim 5 when dependent on claim 3, wherein a respective aperture is provided in the side wall region (42) at the first longitudinal side edge (20a) in alignment with each of the lateral portions (18b) of the recess.

7. A mudguard assembly as claimed in any one of the preceding claims, wherein the main body member (14) is profiled to define features (44) in addition to the mounting region (17) which are operative to provide structural rigidity.

8. A mudguard assembly as claimed in any one of the preceding claims, wherein the mudguard (12) includes a cover member (19) mounted about an upper surface of the mounting region (17) of the main body member (14).

9. A vehicle comprising a mudguard assembly according to any one of the preceding claims.

10. A vehicle as claimed in claim 9, wherein the vehicle is an agricultural tractor.

## Patentansprüche

1. Kotflügelbaugruppe (11) für ein Fahrzeug, wobei die Kotflügelbaugruppe einen Kotflügel (12) und einen Träger (13) zum Montieren des Kotflügels an eine Strukturkomponente des Fahrzeugs aufweist, wobei der Träger einen Kotflügelmontageteilbereich (22b) aufweist, an dem der Kotflügel montiert ist; wobei der Kotflügel ein langgestrecktes Hauptkörperelement (14) mit einer Längsrichtung aufweist, wobei das Hauptkörperelement in der Längsrichtung geformt ist, um sich über ein Rad des Fahrzeugs zu erstrecken, wobei das Hauptkörperelement eine untere Oberfläche (15), die bei Benutzung zu dem Rad gerichtet ist, und eine obere Oberfläche (16), die bei Benutzung von dem Rad weg gerichtet ist, aufweist, wobei das Hauptkörperelement profiliert ist, um einen Montagebereich (17) zu definieren, der einen Rücksprung (18) mit einer nach unten zeigenden Öffnung umfasst, in welchem mindestens ein Teil des Kotflügelmontageteilbereichs (22b) angeordnet ist, wobei der Montagebereich (17) nach außen über die obere Oberfläche (16) des Hauptkörperelements nahe dem Montagebereich vorsteht; **dadurch gekennzeichnet, dass** der Rücksprung (18) einen Längsteilbereich (18a), der sich hauptsächlich in der Längsrichtung des Hauptkörperelements erstreckt, und mindestens einen lateralen Teilbereich (18b), der sich von einem Ende des Längsteilbereichs zu einer ersten lateralen Längskante (20a) des Hauptkörperelements erstreckt, aufweist, wobei der Kotflügelmontageteilbereich (22b) einen Längsabschnitt (25), der in dem Längsteilbereich des Rücksprungs angeordnet ist, und einen lateralen Abschnitt (24), der relativ zu dem Längsabschnitt abgewinkelt ist und in dem lateralen Teilbereich des Rücksprungs angeordnet ist, hat.

2. Kotflügelbaugruppe nach Anspruch 1, wobei der Hauptkörperteilbereich (14) ein plattenartiges Element ist, das profiliert ist, um den Montagebereich (17) in der Form einer geprägten kanalartigen Formation zu bilden.

3. Kotflügelbaugruppe nach Anspruch 1, wobei der Rücksprung (18) zwei laterale Teilbereiche (18b) aufweist, wobei sich jeder laterale Teilbereich von einem jeweiligen Ende des Längsteilbereichs (18a) zu der ersten lateralen Längskante (20a) des Hauptkörperelements hin erstreckt.

4. Kotflügelbaugruppe nach einem der vorhergehenden Ansprüche, wobei der Träger (13) einen ersten Teil (21) zur Befestigung an der Strukturkomponente und einen zweiten Teil (22), der den Kotflügelmontageteilbereich (22b) umfasst, aufweist, wobei der erste Teil des Trägers einen ersten Befestigungsteilbereich (21a) umfasst, der konfiguriert ist, um sich bei Benutzung im Wesentlichen lotrecht zu erstrecken, wobei der zweite Teil (22) des Trägers einen entsprechenden zweiten Befestigungsteilbereich (22a) hat, der relativ zu dem Kotflügelmontageteilbereich abgewinkelt und konfiguriert ist, um lösbar an dem ersten Befestigungsteilbereich befestigbar zu sein.

5. Kotflügelbaugruppe nach Anspruch 1 oder Anspruch 3, wobei das Hauptkörperelement (14) jeweils einen nach unten vorstehenden Seitenwandbereich (42, 43) definiert, der sich entlang jeder der ersten und zweiten Längsseitenkante (20a, 20b) erstreckt, wobei mindestens eine Öffnung in dem Seitenwandbereich an der ersten Längsseitenkante (20a) definiert ist, wobei sich die Öffnung in den mindestens einen lateralen Teilbereich (18b) des Rücksprungs öffnet und der laterale Abschnitt (24) des Montageteilbereichs durch die Öffnung hindurchtritt.

6. Kotflügelbaugruppe nach Anspruch 5 wenn abhängig von Anspruch 3, wobei eine jeweilige Öffnung in dem Seitenwandbereich (42) an der ersten Längsseitenkante (20a) in Ausrichtung auf jeden der lateralen Teilbereiche (18b) des Rücksprungs vorgesehen ist.

7. Kotflügelbaugruppe nach einem der vorhergehenden Ansprüche, wobei das Hauptkörperelement (14) profiliert ist, um zusätzlich zu dem Montagebereich (17) Merkmale (44) zu definieren, die strukturelle Steifigkeit bewirken.

8. Kotflügelbaugruppe nach einem der vorhergehenden Ansprüche, wobei der Kotflügel (12) ein Abdeckelement (19) umfasst, das um eine obere Oberfläche des Montagebereichs (17) des Hauptkörperelements (14) montiert ist.

9. Fahrzeug mit einer Kotflügelbaugruppe nach einem der vorhergehenden Ansprüche.

10. Fahrzeug nach Anspruch 9, wobei das Fahrzeug ein landwirtschaftlicher Traktor ist.

## Revendications

1. Ensemble garde-boue (11) pour un véhicule, l'ensemble garde-boue comprenant un garde-boue (12) et un support (13) pour le montage du garde-boue sur un élément structurel du véhicule, le support comprenant une portion de montage de garde-boue (22b) sur laquelle le garde-boue est monté ; le garde-boue comprenant un organe formant corps principal (14) allongé ayant une direction longitudinale, l'organe formant corps principal étant façonné dans la direction longitudinale pour s'étendre au-dessus d'une roue du véhicule, l'organe formant corps principal ayant une surface inférieure (15) qui, en utilisation, est dirigée vers la roue et une surface supérieure (16) qui, en utilisation, est dirigée à l'opposé de la roue, l'organe formant corps principal étant profilé pour définir une région de montage (17) comportant un évidement (18) doté d'une ouverture faisant face vers le bas dans laquelle au moins une partie de la portion de montage de garde-boue (22b) est située, dans lequel la région de montage fait saillie (17) vers l'extérieur au-delà de la surface supérieure (16) de l'organe formant corps principal proximal à la région de montage ; **caractérisé en ce que** l'évidement (18) possède une portion longitudinale (18a) s'étendant généralement dans la direction longitudinale de l'organe formant corps principal et au moins une portion latérale (18b) qui s'étend d'une extrémité de la portion longitudinale à un premier bord latéral longitudinal (20a) de l'organe formant corps principal, la portion de montage de garde-boue (22b) ayant une section longitudinale (25) située dans la portion longitudinale de l'évidement et une section latérale (24) agencée avec un angle par rapport à la section longitudinale et située dans la portion latérale de l'évidement.

2. Ensemble garde-boue selon la revendication 1, dans lequel la portion formant corps principal (14) est un organe de type feuille profilé pour définir la région de montage (17) sous la forme d'une formation en relief, de type de canal.

3. Ensemble garde-boue selon la revendication 1, dans lequel l'évidement (18) possède deux portions latérales (18b), chaque portion latérale s'étendant d'une extrémité respective de la portion longitudinale (18a) au premier bord latéral longitudinal (20a) de l'organe formant corps principal.

4. Ensemble garde-boue selon l'une quelconque des revendications précédentes, dans lequel le support (13) comprend une première partie (21) pour une fixation à l'élément structurel et une deuxième partie (22) comportant la portion de montage de garde-boue (22b), dans lequel la première partie du support comporte une première portion de fixation (21a) configurée pour s'étendre généralement verticalement en utilisation, la deuxième partie (22) du support ayant une deuxième portion de fixation (22a) correspondante agencée avec un angle par rapport à la portion de montage de garde-boue et configurée pour être apte à être fixée de manière libérable à la première portion de fixation.

5. Ensemble garde-boue selon la revendication 1 ou la revendication 3, dans lequel l'organe formant corps principal (14) définit une région de paroi latérale faisant saillie vers le bas (42, 43) respective s'étendant le long de chacun du premier et d'un deuxième bord latéral longitudinal (20a, 20b), au moins un orifice étant défini dans la région de paroi latérale au niveau du premier bord latéral longitudinal (20a), l'orifice s'ouvrant dans l'au moins une portion latérale (18b) de l'évidement et à travers lequel passe la section latérale (24) de la portion de montage.

6. Ensemble garde-boue selon la revendication 5 lorsqu'elle est prise en dépendance de la revendication 3, dans lequel un orifice respectif est prévu dans la région de paroi latérale (42) au niveau du premier bord latéral longitudinal (20a) en alignement avec chacune des portions latérales (18b) de l'évidement.

7. Ensemble garde-boue selon l'une quelconque des revendications précédentes, dans lequel l'organe formant corps principal (14) est profilé pour définir des attributs (44) en plus de la région de montage (17) qui servent à fournir une rigidité structurelle.

8. Ensemble garde-boue selon l'une quelconque des revendications précédentes, dans lequel le garde-boue (12) comporte un organe formant couvercle (19) monté sur une surface supérieure de la région de montage (17) de l'organe formant corps principal (14).

9. Véhicule comprenant un ensemble garde-boue selon l'une quelconque des revendications précédentes.

10. Véhicule selon la revendication 9, dans lequel le véhicule est un tracteur agricole.
